# EUROPÄISCHE PATENTSCHRIFT

(11) **EP 3 752 377 B1**
(45) Veröffentlichungstag und Bekanntmachung des Hinweises auf die Patenterteilung: **23.08.2023**
(21) Anmeldenummer: 18836455.8
(22) Anmeldetag: 07.12.2018
(51) Int. Cl.: B60J 1/17, B60J 5/04, B60J 10/763

(54) **FAHRZEUGTÜR MIT HÖHENVERSTELLBARER FENSTERSCHEIBE**
VEHICLE DOOR HAVING A HEIGHT-ADJUSTABLE WINDOW PANE
PORTE DE VÉHICULE À VITRE AJUSTABLE EN HAUTEUR

(30) Priorität: 13.02.2018 DE 102018001124
(43) Veröffentlichungstag der Anmeldung: 23.12.2020
(73) Patentinhaber: PSA Automobiles SA, 78300 Poissy (FR)
(72) Erfinder: LANGE, Marcus, 65428 Rüsselsheim (DE)
(74) Vertreter: Spitzfaden, Ralf
(86) Internationale Anmeldenummer: PCT/EP2018/000545
(87) Internationale Veröffentlichungsnummer: WO 2019/158178

(56) Entgegenhaltungen:
- FR-A- 950 045
- FR-A1- 2 446 371
- JP-A- 2014 046 871

## Beschreibung

Die vorliegende Erfindung betrifft eine Fahrzeugtür mit einer höhenverstellbaren Fensterscheibe, insbesondere für einen PKW.

Bei den meisten herkömmlichen Fahrzeugtüren sind die Schmalseiten der höhenverstellbaren Fensterscheibe in Nuten von Führungsschienen eines Fensterrahmens verborgen. Eine Seitenwand der Nut steht bei diesen herkömmlichen Führungsschienen unvermeidlicherweise einige Millimeter über die Außenseiten der Fensterscheiben über.

Zur Minderung des Windwiderstandes, aus akustischen oder ästhetischen Gründen kann es wünschenswert sein, einen solchen Überstand zu vermeiden, doch führt der Wegfall der Seitenwand auch zu einer Destabilisierung der Fensterscheibe, so dass z.B. Fahrtwind die Fensterscheibe auslenken und Zug im Innern der Fahrgastzelle bewirken, das Eindringen von Niederschlägen ermöglichen oder gar die Fensterscheibe aus ihrer Verankerung lösen kann.

Bei einer bekannten Fahrzeugtür ist daher an einer sich in Verstellrichtung der Fensterscheibe erstreckenden Führungsschiene eine versteckte Nut gebildet, in die ein an der Fensterscheibe befestigter Gleiter eingreift, um Bewegungen der Fensterscheibe in Richtung ihrer Oberflächennormalen zu blockieren.

Dieser herkömmliche Aufbau ist relativ teuer zu fertigen, da der Querschnitt der Führungsschiene komplizierter ist als der einer herkömmlichen, den Rand einer Fensterscheibe umgreifenden Führungsschiene, und weil die Fertigung des Gleiters und seine Befestigung an der Fensterscheibe zusätzlichen Aufwand mit sich bringt.

Aus dem Stand der Technik sind die FR 244 6371 A1 sowie die JP 2014 046871 B1 bekannt.

Eine Aufgabe der vorliegenden Erfindung ist, eine Fahrzeugtür mit einer höhenverstellbaren Fensterscheibe vorzuschlagen, die einfacher strukturiert und effizienter zusammenzubauen ist.

Die Aufgabe wird einer Ausgestaltung der Erfindung zufolge gelöst, indem bei einer Fahrzeugtür mit einem Türkörper, einer Fensteröffnung, die von einem Fensterrahmen und nach unten von dem Türkörper begrenzt ist, und einer höhenverstellbaren Fensterscheibe, die zwischen einer wenigstens teilweise im Türkörper versenkten Offenstellung und einer die Fensteröffnung überdeckenden Schließstellung bewegbar ist, die Fensterscheibe zwischen der an ihrer Außenseite anliegenden Schachtleiste und an ihrer Innenseite oberhalb und unterhalb der Schachtleiste anliegenden Anlageflächen geklemmt und von den Anlageflächen und der Schachtleiste wenigstens eine elastisch nachgiebig ist.

Eine zum Abheben der Innenseite von dem Rahmen auf die Fensterscheibe in Höhe ihrer Oberkante auszuübende Kraft kann zwischen 10 und 100 N, vorzugsweise zwischen 25 und 50 N, betragen. Niedrigere Kräfte genügen nicht, um eine Auslenkung der Fensterscheibe durch Fahrtwind zu verhindern, höhere führen zu starkem Reibverschleiß.

Windkanalversuche haben gezeigt, dass die oben angegebenen Kräfte insbesondere dann genügen, um eine Auslenkung der Fensterscheibe zu verhindern, wenn in einer teiloffenen Stellung der Fensterscheibe der Druckunterschied zwischen Innen- und Außenseite der Fensterscheibe begrenzt ist.

Damit die Fensterscheibe in der Schließstellung auftretenden höheren Kräften des Fahrtwindes widerstehen kann, kann eine Oberkante der Fensterscheibe in der Schließstellung in eine Nut des Fensterrahmens eingreifen.

Die Kraft, die die Fensterscheibe an die Auflagefläche drückt, geht typischerweise auf eine elastische Deformation von Teilen der Tür zurück. Diese elastische Deformation kann aufgrund von Fertigungstoleranzen von einer Tür zur anderen variieren. Um den Einfluss dieser unterschiedlichen Deformation auf die Anlagekraft, mit der die Fensterscheibe gegen die Auflagefläche drückt, zu begrenzen, ist die Federkonstante dieser elastisch deformierten Teile zweckmäßigerweise so gewählt, dass wenn die Fensterscheibe aus der an der Anlagefläche anliegenden Stellung normal zur Fensterscheibenoberfläche ausgelenkt wird, die der Auslenkung entgegenwirkende Rückstellkraft der Fensterscheibe pro Millimeter Abstand ihrer Oberkante von der Auflagefläche um zwischen 10 und 50% der im anliegenden Zustand wirkenden Kraft zunimmt, d.h. wenn die Auflagefläche den Weg der Fensterscheibe nicht blockieren würde, dann würde diese in entspanntem Zustand eine Stellung einnehmen, in der ihr Oberkante um 2-10 mm ins Fahrzeuginnere hinein verschoben ist.

Die Rückstellkraft kann in der Schließstellung gemessen werden; in dieser Stellung ist der Hebelarm einer an der Oberkante der Fensterscheibe angreifenden Kraft am längsten und folglich der zum Abheben der Fensterscheibe von der Auflagefläche benötigte Betrag der Kraft am geringsten.

Wenn die Oberkante der Fensterscheibe in der Schließstellung in eine Nut des Fensterrahmens eingreift, dann kann dieser Eingriff eine Auslenkung des Fensters auch bei sehr hoher einwirkender Kraft verhindern. Deswegen ist in diesem Fall die Rückstellkraft vorzugsweise in einer Stellung der Fensterscheibe gemessen, in der die Oberkante soeben aus der Nut ausgerückt ist.

Um die nötige Kraft auf die Anlagefläche ausüben zu können, darf die Fensterscheibe selber nicht zu leicht biegsam sein. Deswegen ist eine Stärke der Fensterscheibe von über 4mm bevorzugt; eine am Markt verfügbare Scheibenstärke ist z.B. 4,85 mm.

Um in jeder Stellung der Fensterscheibe die nötige Klemmung der Fensterscheibe zwischen den Anlageflächen und der Schachtleiste zu gewährleisten, können die obere und die untere Anlagefläche stumpfwinklig aufeinandertreffen.

Die untere Anlagefläche kann insbesondere ein Schenkel eines eine vertikale Kante der Fensterscheibe im Türkörper umgreifenden Führungsprofils sein.

Um die Fensterscheibe führen zu können, sollte das Führungsprofil durch die zwischen ihm und der Fensterscheibe auftretenden Kräfte allenfalls in geringem Umfang verformbar sein; es kann sich insbesondere um ein Metallprofil handeln.

Um die gewünschte Andrückkraft zwischen Fensterscheibe und Anlagefläche erzeugen zu können, sollte die Fensterscheibe in der Schließstellung in dem Führungsprofil auf einer Länge von wenigstens 40 mm geführt sein.

Andererseits sollte die Überlappung zwischen der Fensterscheibe und dem Führungsprofil in der Schließstellung 80 mm nicht überschreiten, damit die Bewegungsfreiheit der Fensterscheibe durch die begrenzten Abmessungen des Türkörpers nicht unnötig eingeschränkt wird und eine Restüberlappung der Fensterscheibe und der Fensteröffnung in der Offenstellung möglichst vermieden wird.

Wenigstens eine der Anlageflächen sollte durch ein elastisch nachgiebiges Profil gebildet sein; vorzugsweise ist die obere Anlagefläche leichter nachgiebig als die untere.

Ein solches nachgiebiges Profil kann typischerweise zur Gänze oder wenigstens bereichsweise aus einem gummielastischen Kunststoff geformt sein. Es kann eine - z.B. durch Abstützung auf einer starren Unterlage - ortsfeste Basis und wenigstens eine schwenkbar mit der Basis verbundene, an der Fensterscheibe anliegende Dichtlippe umfassen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine Seitenansicht von zwei Türen einer erfindungsgemäßen Fahrzeugkarosserie;
- Fig. 2: einen Schnitt durch eine der zwei Türen mit der Fensterscheibe in Offenstellung;
- Fig. 3: einen Schnitt entlang der Ebene III-III der Fig. 2;
- Fig. 4: einen zu Fig. 2 analogen Schnitt mit der Fensterscheibe in Schließstellung;
- Fig. 5: einen schematischen Schnitt entlang der Ebene V-V der Fig. 4; und
- Fig. 6: einen detaillierten Schnitt entlang der Ebene V-V gemäß einer Weiterbildung;
- Fig. 7: einen Schnitt durch eine obere Schiene des Fensterrahmens gemäß der Weiterbildung; und
- Fig. 8: einen Schnitt durch eine äußere Schachtleiste.

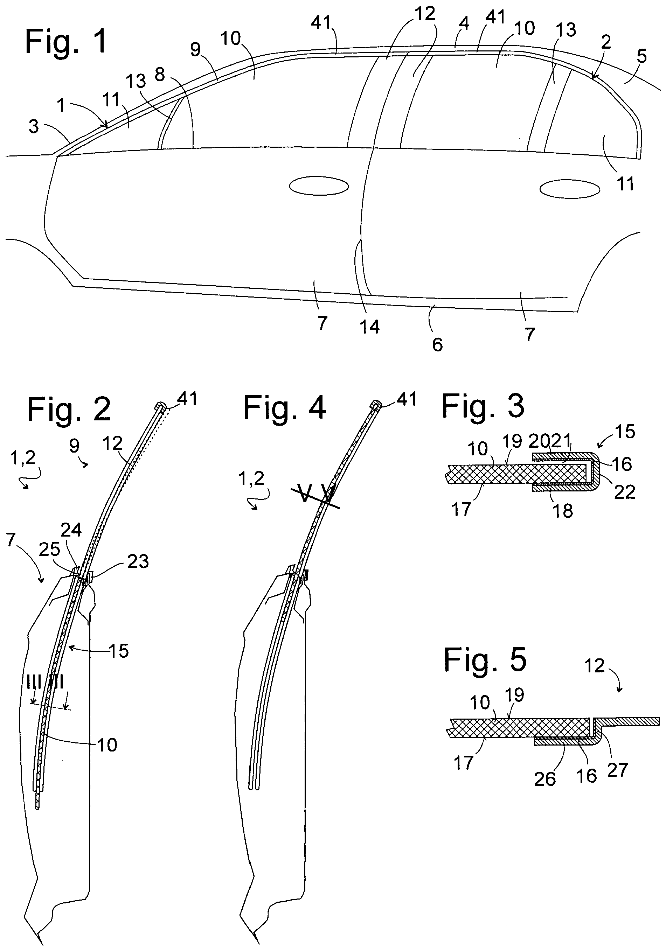

Fig. 1 zeigt eine Flanke einer Fahrzeugkarosserie mit einer vorderen Tür 1 und einer hinteren Tür 2. Die Türen 1, 2 füllen eine gemeinsame Öffnung der Karosserie aus, die von einer A-Säule 3, einem seitlichen Dachrahmen 4, einer C-Säule 5 und einem Schweller 6 begrenzt ist. Eine B-Säule ist hintereinander zugewandten Rändern der Türen 1, 2 verborgen.

Die Türen 1, 2 sind jeweils gegliedert in einen hohlen Türkörper 7 unterhalb einer Gürtellinie 8 und einen Fensterrahmen 9 oberhalb der Gürtellinie 8. Die Fensterrahmen 9 umgeben jeweils eine großflächige Fensteröffnung mit einer Fensterscheibe 10, die zwischen der in Fig.1 gezeigten, die Fensteröffnung ausfüllenden Schließstellung und einer im Türkörper 7 versenkten Offenstellung bewegbar ist. Es können, wie gezeigt, weitere Fensteröffnungen mit unbeweglichen Fensterscheiben 11 vorhanden sein.

Die verstellbaren Fensterscheiben 10 sind jeweils seitlich eingefasst von sich erfindungsgemäß in ihrer Verstellrichtung erstreckenden Führungsschienen 12, 13 des Fensterrahmens 9. Die Führungsschienen 12 der beiden Türen 1, 2 liegen einander vor der B-Säule, beiderseits eines Spalts 14, gegenüber.

Fig. 2 zeigt einen vertikalen Schnitt durch eine der Türen 1, 2 mit der Fensterscheibe 10 in Offenstellung. Die Fensterscheibe 10 ist im Türkörper 7 versenkt und entlang ihrer in Fahrzeuglängsrichtung vorderen und hinteren Kanten in Führungsprofilen 15 mit U-förmigem Querschnitt geführt, von denen eines in Fig. 2 zu sehen ist. Die Fensterscheibe 10 ist zylindrisch gewölbt; dementsprechend sind die Führungsprofile 15 mit gleichem Krümmungsradius wie die Fensterscheibe 10 kreisbogenförmig gekrümmt, so dass die Fensterscheibe 10 zwischen ihnen spannungsfrei gehalten ist.

Fig. 3 zeigt einen schematischen Querschnitt durch eines der Führungsprofile 15 und den darin aufgenommenen Rand der Fensterscheibe 10. Das Führungsprofil 15 ist aus einem Stahlblech geformt und an seiner Innenseite mit einer Gleitschicht 16 ausgekleidet, um einen direkten Kontakt des Stahls mit der Fensterscheibe 10 zu verhindern, der bei der Bewegung der Fensterscheibe 10 Schleifspuren erzeugen könnte. Ein innerer Schenkel 18 des Führungsprofils 15 bildet eine Anlagefläche, an der eine Innenseite 17 der Fensterscheibe 10 anliegt. Zwischen einer Außenseite 19 der Fensterscheibe 10 und einem äußeren Schenkel 20 des Führungsprofils 15 erstreckt sich ein schmaler Spalt 21. Die beiden Schenkel 18, 20 sind über eine Basisleiste 22 verbunden, die einer Kante der Fensterscheibe 10 gegenüberliegt.

Wiederum bezogen auf Fig. 2 schließen eine innere und eine äußere Schachtleiste 23, 24 den Türkörper 7 nach oben ab. Die äußere Schachtleiste 24 weist eine in den Zwischenraum zwischen den Schachtleisten 23, 24 hinein vorspringende Rippe 25 auf, an der die Außenseite 19 der Fensterscheibe 10 anliegt.

Erfindungsgemäß hat die Führungsschiene 12 des Fensterrahmens 9, wie in Fig. 5 genauer zu erkennen, einen L- oder Z-förmigen Querschnitt mit in etwa rechtwinklig aufeinandertreffenden Schenkeln 26, 27. Der eine 26 verlängert den inneren Schenkel 18 und der andere 27 die Basisleiste 22 des Führungsprofils 15 nach oben über die Gürtellinie 8 hinaus. Der Schenkel 26 ist mit dem gleichen Radius wie der innere Schenkel 18 kreisbogenförmig gekrümmt, allerdings fallen die Krümmungsmittelpunkte der beiden Schenkel 18, 26 nicht überein, so dass beide in Höhe der Rippe 25 stumpfwinklig aufeinandertreffen.

Wäre die Fensterscheibe 10 bei einer Aufwärtsbewegung ausgehend von ihrer in Fig. 2 gezeigten Offenstellung nur durch das Führungsprofil 15 geführt, so würde sie, wie in Fig. 2 durch einen gestrichelten Umriss verdeutlicht, einem kreisbogenförmigen Weg folgen, dessen Krümmungsmittelpunkt derselbe ist wie derjenige der Schenkel 16, 18. Da allerdings die Krümmungsmittelpunkte des Führungsprofils 15 und der Führunsgschiene12 nicht übereinstimmen, ist dieser Weg durch die Führungsschiene 12 versperrt; die Oberkante der Fensterscheibe 10 kann nur soweit in Richtung der Fahrzeugmitte vorrücken, wie es die Führungsschiene 12 zulässt. Deswegen bildet der Schenkel 26 der Führungsschiene 12 erfindungsgemäß eine weitere Anlagefläche, an die die Fensterscheibe 10 auf dem Weg in die Schließstellung immer fest angedrückt ist, so dass sie unter dem Einfluss des Fahrtwindes nicht den Kontakt zum Schenkel 26 verliert.

Die vertikale Ausdehnung der Fensterscheibe 10 ist um wenigstens 100 mm größer als die des Fensterrahmens 9, so dass sie auch in der Schließstellung noch auf einer Länge von wenigstens 100 mm in der Führungsschiene 12 geführt ist und durch diese einem Drehmoment ausgesetzt ist, das ausreicht, um die Fensterscheibe 10 in jeder Stellung fest an den Schenkel 26 angedrückt zu halten.

Die Fensterscheibe 10 darf selber nur in geringem Umfang verformbar sein, um den nötigen Druck zwischen ihr und dem Schenkel 26 in jeder Stellung der Fensterscheibe 10 zwischen der Offenstellung und der in Fig. 4 gezeigten Schließstellung zu gewährleisten. Deswegen beträgt ihre Stärke über 4 mm; Scheiben mit einer Stärke von 4.85 mm sind am Markt verfügbar.

Die Führungsschiene 12 kann wie das Führungsprofil 15 in sich starr sein und wie schematisch in Fig. 5 gezeigt, ein lokal mit einer Gleitschicht 16 versehenes Metallprofil sein; in diesem Fall kann die nötige Elastizität dadurch geschaffen werden, dass die Rippe 25 elastisch auslenkbar ist.

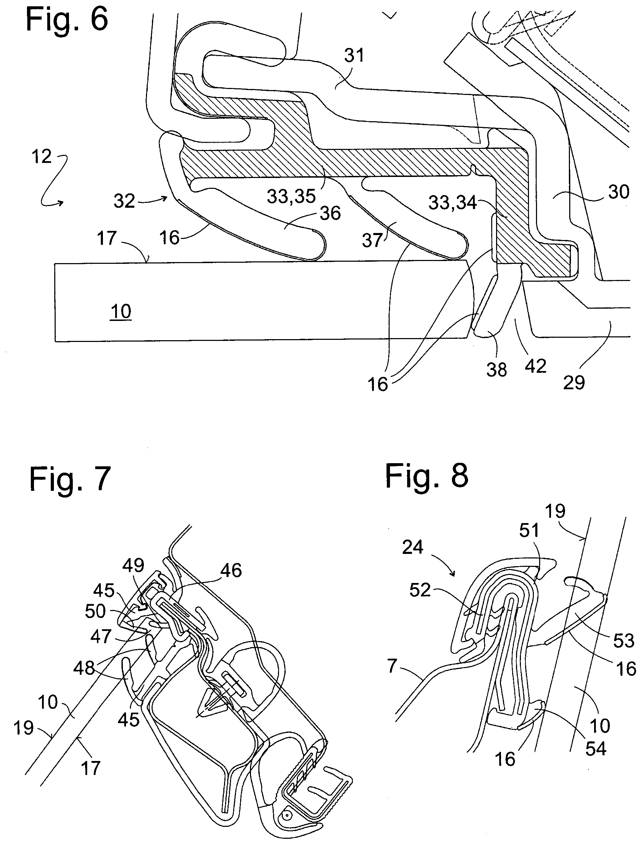

Fig. 6 zeigt einen zu Fig. 5 analogen Schnitt durch die Führungsschiene 12 gemäß einer bevorzugten Weiterbildung. Ein starrer Träger 28, z.B. aus einem oder mehreren Metallblechen, umfasst einen in der Fig. nur teilweise dargestellten, an der Außenseite des Fahrzeugs freiliegenden Schenkel 29, einen sich quer zum Schenkel 29 ins Fahrzeuginnere erstreckenden Schenkel 30 und einen an einen inneren Rand des Schenkels 30 anschließenden, in etwa parallel zum Schenkel 29 verlaufenden, gekröpften Schenkel 31. Ein Dichtprofil 32 überdeckt die Außenseiten der Schenkel 30, 31. Es umfasst eine steife, im Querschnitt in etwa L-förmige Basis 33 mit Schenkeln 34, 35 sowie mehrere, an die Basis 33 angeformte elastische Dichtlippen 36, 37, 38. Das Dichtprofil 32 ist am Träger 28 verankert, indem ein Vorsprung 39 der Basis 33 in eine in den Schenkel 30 eingetiefte Nut eingerastet ist und ein auf eine Innenseite des Trägers 28 aufgerastetes Verkleidungsprofil 40, z.B. aus einem steifen Kunststoff, in eine randoffene Nut des dem gekröpften Schenkel 31 gegenüberliegenden Schenkels 35 eingreift.

Fig. 6 zeigt die Fensterscheibe 10 in einer mit dem Schenkel 29 bündigen Stellung, die die Fensterscheibe 10 dann einnimmt, wenn sie die Schließstellung erreicht hat und ihre obere Kante in eine nach unten offene Nut einer oberen Schiene 41 (s. Fig. 1, 2, 4) des Fensterrahmens 9 eingerückt ist. In dieser Stellung sind die Dichtlippen 36, 37, die vom Schenkel 35 des Dichtprofils ausgehen und an der Innenseite 17 der Fensterscheibe 10 anliegen, nur schwach deformiert, da der Druck der Fensterscheibe 10 sich nicht nur auf sie, sondern auch auf Dichtlippen der oberen Schiene 41 verteilt. In einer teiloffenen Stellung, in der die Fensterscheibe 10 keinen Kontakt mit der oberen Schiene 41 hat, sind die Dichtlippen 36, 37 allein dem Druck der Fensterscheibe 10 ausgesetzt und daher stärker ausgelenkt, so dass die Fensterscheibe geringfügig hinter den Schenkel 29 ins Fahrzeuginnere hinein zurückspringt.

Die Dichtlippe 38 steht von einer äußeren Kante des Schenkels 34 des Dichtprofils 32 in einen zur Fahrzeugaußenseite offenen Spalt 42 zwischen einer Vorder- oder Hinterkante der Fensterscheibe 10 und dem Schenkel 29 vor ist durch Kontakt mit der Kante der Fensterscheibe 10 elastisch ausgelenkt. Indem sie den Spalt 42 - inbesondere wenn die Fensterscheibe 10 wie in Fig. 6 gezeigt mit dem Schenkel 29 bündig ist - weitgehend ausfüllt, trägt sie zur Minimierung des Fahrgeräuschs und des Windwiderstands bei, außerdem kaschiert sie eventuell durch Fertigungstoleranzen oder durch die Auf- und Abbewegung der Fensterscheibe 10 bedingte schwankende Breiten des Spalts 42. Wenn die Fensterscheibe 10 aus der mit dem Schenkel 29 bündigen Stellung ins Fahrzeuginnere ausgelenkt ist, folgt die Dichtlippe 42 dieser Auslenkung und hält einen dichten Kontakt zur Fensterscheibe 10 aufrecht, so dass der Fahrtwind zwischen der Innenseite der Fensterscheibe 10 und dem Schenkel 35 keine Turbulenzen anregen kann, die die Fensterscheibe zum Schwingen bringen könnten.

Eine Gleitschicht 16 ist jeweils an den der Fensterscheibe 10 zugewandten Seiten der Dichtlippen 36, 37, 38 und am Schenkel 34 vorgesehen.

Fig. 7 zeigt einen Querschnitt durch die oben erwähnte obere Schiene 41 des Fensterrahmens 9. An einem - hier aus zwei Stahlblechen zusammengefügten - Trägerprofil 43 ist ein Dichtprofil 44 angebracht. Das Dichtprofil 44 umfasst eine steife Basis 45, in die eine auf einen Rand des Trägerprofils 43 aufgerastete Klammer 46 eingebettet ist. An diese Basis 45 sind um eine nach unten offene Nut 47 herum mehrere elastische Dichtlippen angeformt. Zwei dieser Dichtlippen, mit 48 bezeichnet, kommen an der Innenseite 17 der Fensterscheibe 10 zur Anlage, wenn sich diese der Schließstellung nähert, und erhöhen so den nach außen gerichteten Druck auf die Fensterschiebe 10, so dass deren Außenseite 19 bei Erreichen der Schließstellung bündig mit dem Schenkel 29 zu liegen kommt. Eine weitere Dichtlippe 49 liegt in der Schließstellung an einer Oberkante der Fensterscheibe 10 an; die Anordnung der Dichtlippen 48, 49 gleicht somit weitgehend derjenigen der Dichtlippen 36-38 am Dichtprofil 32. Eine vierte Dichtlippe 50 des Dichtprofils 44 liegt in der Schließstellung an der Außenseite 19 der Fensterscheibe 10 an.

Fig. 8 zeigt einen Querschnitt der äußeren Schachtleiste 24. Wie das Dichtprofil 44 hat die äußere Schachtleiste 24 eine steife Basis 51, in die eine metallische Klammer 52 eingelegt ist, die eine Oberkante des Türkörpers 7 umgreift und die Schachtleiste 24 an dem Türkörper 7 fest verrastet hält. An einer der Fensterscheibe zugewandten Seite der Basis 51 sind zwei Rippen angeformt. Eine von ihnen ist im Kontakt mit der Außenseite 19 der Fensterscheibe 10 elastisch auslenkbar und fungiert als Dichtlippe 53, die an der Außenseite 19 ablaufendes Regenwasser vom Innern des Türkörpers 7 fernhält. Die zweite Rippe 54 ist nicht oder allenfalls in geringem Umfang nachgiebig. Um sich zwischen Offen- und Schließstellung bewegen zu können, muss die Fensterscheibe 10 daher die Anlageflächen der Schenkel 18 und/oder 26 verformen. Im Falle des Schenkels 26 ist dies durch die Nachgiebigkeit der Dichtlippen 36, 37 sichergestellt. Eine im Vergleich zu den Dichtlippen 36, 37 wesentlich geringere Nachgiebigkeit des Schenkels 18 und der Rippe 54 gewährleistet, dass eine hohe und mit zunehmender Auslenkung stark zunehmende Kraft in Höhe der Oberkante der Fensterscheibe 10 erforderlich ist, um die Fensterscheibe 10 nach außen so weit auszulenken, dass der Kontakt zu den Dichtlippen 36, 37 verlorengeht, und somit dieser Kontakt unter realistischen Fahrtwindbedingungen immer besteht.

### Bezugszeichenliste

- 1: Tür
- 2: Tür
- 3: A-Säule
- 4: Dachrahmen
- 5: C-Säule
- 6: Schweller
- 7: Türkörper
- 8: Gürtellinie
- 9: Fensterrahmen
- 10: Fensterscheibe
- 11: Fensterscheibe
- 12: Führungsschiene
- 13: Führungsschiene
- 14: Spalt
- 15: Führungsprofil
- 16: Gleitschicht
- 17: Innenseite
- 18: innerer Schenkel
- 19: Außenseite
- 20: äußerer Schenkel
- 21: Spalt
- 22: Basisleiste
- 23: innere Schachtleiste
- 24: äußere Schachtleiste
- 25: Rippe
- 26: Schenkel
- 27: Schenkel
- 28: Träger
- 29: Schenkel
- 30: Schenkel
- 31: Schenkel
- 32: Dichtprofil
- 33: Basis
- 34: Schenkel
- 35: Schenkel
- 36: Dichtlippe
- 37: Dichtlippe
- 38: Dichtlippe
- 39: Vorsprung
- 40: Verkleidungsprofil
- 41: obere Schiene
- 42: Spalt
- 43: Trägerprofil
- 44: Dichtprofil
- 45: Basis
- 46: Klammer
- 47: Nut
- 48: Dichtlippe
- 49: Dichtlippe
- 50: Dichtlippe
- 51: Basis
- 52: Klammer
- 53: Dichtlippe
- 54: Rippe

## Patentansprüche

1. Tür für ein Kraftfahrzeug mit einem Türkörper (7), einer Fensteröffnung, die von einem Fensterrahmen (9) und an einer Unterseite von dem Türkörper (7) begrenzt ist, und einer höhenverstellbaren Fensterscheibe (10), die an einer Schachtleiste (24) vorbei zwischen einer wenigstens teilweise im Türkörper (7) versenkten Offenstellung und einer die Fensteröffnung überdeckenden Schließstellung bewegbar ist, wobei die Fensterscheibe (10) zwischen der an ihrer Außenseite (19) anliegenden Schachtleiste (24) und an ihrer Innenseite (17) oberhalb und unterhalb der Schachtleiste (24) anliegenden Anlageflächen (18, 26) geklemmt ist und von den Anlageflächen (18, 26) und der Schachtleiste (24) wenigstens eine elastisch nachgiebig ist, wobei die verstellbare Fensterscheibe (10) seitlich von sich in ihrer Verstellrichtung erstreckende Führungsschienen (12, 13) des Fensterrahmen (9) eingefasst ist, **dadurch gekennzeichnet, dass** eine der Führungsschienen (12) mit einem L- oder Z-förmigen Querschnitt mit in etwa rechtwinklig aufeinandertreffenden Schenkeln (26, 27) ausgeführt ist, wobei der eine Schenkel (26) den inneren Schenkel (18) und der andere Schenkel (27) die Basisleiste (22) des Führungsprofils (15) nach oben über die Gürtellinie (8) hinaus verlängert und einer der Schenkel (26) auf dem Weg der Fensterscheibe (10) in die Schließstellung eine weitere Anlagefläche für die Fensterscheibe (10) bildet, an die die Fensterscheibe (10) immer fest angedrückt ist, so dass sie unter dem Einfluss des Fahrtwindes nicht den Kontakt zum Schenkel (26) verliert.

2. Tür nach Anspruch 1, bei der eine zum Abheben der Innenseite (17) von der oberen Anlagefläche (26) auf die Fensterscheibe (10) in Höhe ihrer Oberkante auszuübende Kraft zwischen 10 und 100 N, vorzugsweise zwischen 25 und 50 N, beträgt.

3. Tür nach Anspruch 1 oder 2, bei der die Oberkante der Fensterscheibe (10) in der Schließstellung in eine Nut (47) des Fensterrahmens (9) eingreift.

4. Tür nach einem der vorhergehenden Ansprüche, bei der die auf die Fensterscheibe (10) auszuübende Kraft pro Millimeter Abstand ihrer Oberkante von der oberen Anlagefläche (26) um zwischen 10 und 50% der im anliegenden Zustand wirkenden Kraft zunimmt.

5. Tür nach Anspruch 4, bei der die Rückstellkraft in der Schließstellung gemessen ist.

6. Tür nach Anspruch 4, soweit auf Anspruch 3 rückbezogen, bei der die Rückstellkraft in einer Stellung der Fensterscheibe (10) gemessen ist, in der die Oberkante soeben aus der Nut (47) ausgerückt ist.

7. Tür nach einem der vorhergehenden Ansprüche, bei der die Stärke der Fensterscheibe (10) wenigstens 4 mm beträgt.

8. Tür nach einem der vorhergehenden Ansprüche, bei der die obere und die untere Anlagefläche (18, 26) stumpfwinklig aufeinandertreffen.

9. Tür nach einem der vorhergehenden Ansprüche, bei der die untere Anlagefläche (18) ein Schenkel (18) eines eine vertikale Kante der Fensterscheibe (10) im Türkörper (7) umgreifenden Führungsprofils (12) ist.

10. Tür nach Anspruch 9, bei der die Fensterscheibe (10) in der Schließstellung in dem Führungsprofil (12) auf einer Länge von 40-80 mm geführt ist.

11. Tür nach einem der vorhergehenden Ansprüche, bei der wenigstens eine der Anlageflächen (26) durch ein elastisch nachgiebiges Profil (32) gebildet ist.

12. Tür nach Anspruch 11, bei der das Profil (32) eine ortsfeste Basis (33) und wenigstens eine schwenkbar mit der Basis (33) verbundene, an der Fensterscheibe (10) anliegende Dichtlippe (36, 37) umfasst.

## Claims

1. Door for a motor vehicle with a door body (7), a window opening which is delimited by a window frame (9) and on an underside by the door body (7), and a height-adjustable window pane (10) which is attached to a shaft strip (24 ) between an open position that is at least partially recessed in the door body (7) and a closed position that covers the window opening, the window pane (10) being movable between the slot strip (24) lying on its outside (19) and on its inside (17) above and is clamped below the shaft strip (24) bearing surfaces (18, 26) and of the bearing surfaces (18, 26) and the shaft strip (24) at least one is elastically resilient, the adjustable window pane (10) being framed laterally by guide rails (12, 13) of the window frame (9) which extend in its direction of adjustment, **characterized in that** one of the guide rails (12) with a L- or Z-shaped cross section with approximately right angles clashing legs (26, 27) is performed, wherein the one Leg (26) the inner leg (18) and the other leg (27) the base bar (22) of the professional guide (15) upwards over the belt line (8) addition extended and one of the legs (26) on the way Window pane (10) forms a further contact surface for the window pane (10) in the closed position, to which the window pane (10) is always fixed is pressed, so that it does not lose contact with the leg (26) under the influence of the wind.

2. Door according to Claim 1, in which the force to be exerted on the window pane (10) at the height of its upper edge to lift the inside (17) from the upper contact surface (26) is between 10 and 100 N, preferably between 25 and 50 N .

3. Door according to Claim 1 or 2, in which the upper edge of the window pane (10) engages in a groove (47) of the window frame (9) in the closed position.

4. Door according to one of the preceding claims, in which the force to be exerted on the window pane (10) increases by between 10 and 50% of the force acting in the applied state per millimeter of distance between its upper edge and the upper bearing surface (26).

5. Door according to claim 4, wherein the restoring force is measured in the closed position.

6. A door according to claim 4 when dependent on claim 3, in which the restoring force is measured in a position of the window pane (10) in which the upper edge has just disengaged from the groove (47).

7. Door according to one of the preceding claims, in which the thickness of the window pane (10) is at least 4 mm.

8. Door according to one of the preceding claims, in which the upper and lower bearing surfaces (18, 26) meet at an obtuse angle.

9. Door according to one of the preceding claims, in which the lower contact surface (18) is a leg (18) of a vertical edge of the window pane (10) in the door body (7) encompassing guide profile (12).

10. Door according to claim 9, in which the window pane (10) is guided in the closed position in the guide profile (12) over a length of 40-80 mm.

11. Door according to one of the preceding claims, in which at least one of the contact surfaces (26) is formed by an elastically flexible profile (32).

12. Door according to claim 11, in which the profile (32) comprises a stationary base (33) and at least one sealing lip (36, 37) pivotally connected to the base (33) and abutting the window pane (10).

## Revendications

1. Porte pour véhicule automobile avec un corps de porte (7), une ouverture de fenêtre qui est délimitée par un cadre de fenêtre (9) et sur une face inférieure par le corps de porte (7), et une vitre réglable en hauteur (10) qui est fixée à une bande de tige (24) entre une position ouverte qui est au moins partiellement en retrait dans le corps de porte (7) et une position fermée qui recouvre l'ouverture de la fenêtre, la vitre (10) étant mobile entre la bande de fente ( 24) reposant à l'extérieur (19) et à l'intérieur (17) au-dessus et enserré au-dessous des surfaces d'appui (18, 26) de la bande d'arbre (24) et des surfaces d'appui (18, 26) et de la bande d'arbre (24 ) au moins un est élastiquement élastique, la vitre réglable (10) étant encadrée latéralement par des rails de guidage (12, 13) du cadre de fenêtre (9) qui s'étendent dans sa direction de réglage, **caractérisé en ce que** l'un des rails de guidage (12) avec un Section transversale en forme de L ou de Z avec des angles approximativement droits des jambes de collision (26, 27) sont exécutées, dans laquelle l'une Jambe (26) la jambe intérieure (18) et l'autre jambe (27) la barre de base (22) du guide professionnel (15) vers le haut sur la ligne de ceinture (8) addition déployée et l'une des jambes (26) sur le chemin La vitre (10) forme une autre surface de contact pour la vitre (10) en position fermée, à laquelle la vitre (10) est toujours fixée est pressé, de sorte qu'il ne perde pas le contact avec la jambe (26) sous l'effet du vent.

2. Porte selon la revendication 1, dans laquelle la force à exercer sur la vitre (10) à hauteur de son bord supérieur pour soulever l'intérieur (17) de la surface supérieure de contact (26) est comprise entre 10 et 100 N , de préférence entre 25 et 50 N .

3. Porte selon la revendication 1 ou 2, dans laquelle le bord supérieur de la vitre (10) s'engage dans une rainure (47) du cadre de fenêtre (9) en position fermée.

4. Porte selon l'une des revendications précédentes, dans laquelle la force à exercer sur le vitrage (10) augmente de 10 à 50 % de la force agissant à l'état appliqué par millimètre de distance entre son bord supérieur et le surface d'appui supérieure (26).

5. Porte selon la revendication 4, dans laquelle la force de rappel est mesurée en position fermée.

6. Porte selon la revendication 4 lorsqu'elle dépend de la revendication 3, dans laquelle la force de rappel est mesurée dans une position du vitrage (10) dans laquelle le bord supérieur vient juste de se dégager de la rainure (47).

7. Porte selon l'une des revendications précédentes, dans laquelle l'épaisseur de la vitre (10) est d'au moins 4 mm.

8. Porte selon l'une des revendications précédentes, dans laquelle les surfaces d'appui supérieure et inférieure (18, 26) se rejoignent selon un angle obtus.

9. Porte selon l'une des revendications précédentes, dans laquelle la surface inférieure de contact (18) est une branche (18) d'un bord vertical de la vitre (10) dans le corps de porte (7) englobant le profilé de guidage (12) .

10. Porte selon la revendication 9, dans laquelle la vitre (10) est guidée en position fermée dans le profilé de guidage (12) sur une longueur de 40-80 mm.

11. Porte selon l'une des revendications précédentes, dans laquelle au moins une des surfaces de contact (26) est formée par un profilé élastiquement flexible (32).

12. Porte selon la revendication 11, dans laquelle le profilé (32) comprend une embase fixe (33) et au moins une lèvre d'étanchéité (36, 37) reliée pivotante à l'embase (33) et en butée contre la vitre (10).
